# EUROPEAN PATENT APPLICATION

(11) **EP 4 697 172 A1**
(43) Date of publication of application: **18.02.2026**
(21) Application number: 25195673.6
(22) Date of filing: 13.08.2025
(51) Int. Cl.: G06F 9/54, G06F 9/52

(54) **HUMAN-MACHINE-ENVIRONMENT DATA COMMUNICATION METHOD, APPARATUS, AND SYSTEM, EDGE COMPUTING DEVICE, AND STORAGE MEDIUM**

(30) Priority: 16.08.2024 CN 202411132081
(71) Applicant: Kingfar International Inc., Beijing 100080 (CN)
(72) Inventor: ZHAO, Qichao, 100080 Beijing (CN); YANG, Ran, 100080 Beijing (CN)
(74) Representative: Lewis Silkin LLP

(57) **Abstract**

Embodiments of the present disclosure provide a communication method, apparatus, and system, an edge computing device, and a storage medium. By establishing a message queue in a shared memory space and defining a data structure of the message queue, a process may obtain pointer information by parsing a queue header of the message queue, and read a message body from a message storage area or write the message body to the message storage area based on the pointer information, which combines an efficient access characteristic of a shared memory and high scalability, decoupling, and other advantages of the message queue, thereby improving efficiency of inter-process communication, and utilizes an asynchronous feature of the message queue, thereby improving concurrency of the inter-process communication.

## Description

### FIELD

The present disclosure relates to the technical fields of data processing and human factor intelligence, and in particular, to a human-machine-environment data communication method, a human-machine-environment data communication apparatus, a human-machine-environment data communication system, an edge computing device, and a storage medium.

### BACKGROUND

Inter-process communication often employs a Message Queuing Telemetry Transport (MQTT) protocol, which is a lightweight message transmission protocol. A communication mechanism of MQTT is based on a central broker, and clients do not communicate directly with each other but publish and subscribe to messages through the broker.

However, inter-process access based on MQTT has a problem of low efficiency.

### SUMMARY

Embodiments of the present disclosure provide a human-machine-environment data communication method, a human-machine-environment data communication apparatus, a human-machine-environment data communication system, an edge computing device, and a storage medium. The technical solution provided according to the embodiments of the present disclosure is used to solve a problem of low efficiency in inter-process access in the prior art.

In a first aspect, the embodiments of the present disclosure provide a human-machine-environment data communication method. The human-machine-environment data communication method includes: parsing a queue header of a message queue and obtaining pointer information, in which the message queue is established in a shared memory space and includes the queue header and a message storage area, and in which the queue header includes the pointer information, and in which the message storage area is used to store a message body and the message body includes human-machine-environment data; and reading the message body from the message storage area or writing the message body to the message storage area based on the pointer information.

In some embodiments, the pointer information includes an initial position of a first write start pointer and an initial position of a first write end pointer; and said reading the message body from the message storage area or writing the message body to the message storage area based on the pointer information includes: modifying the initial position of the first write end pointer to an end position according to a size of a to-be-written message, in which a difference between the end position and the initial position is equal to the size of the to-be-written message; and writing the to-be-written message starting from the initial position of the first write start pointer until the to-be-written message is completely written, and updating the initial position of the first write start pointer to an end position of the to-be-written message.

In some embodiments, the method further includes, prior to said modifying the initial position of the first write end pointer to the end position according to the size of the to-be-written message: obtaining a mutual exclusion lock; and the method further includes, subsequent to said writing the to-be-written message starting from the initial position of the first write start pointer until the to-be-written message is completely written, and updating the initial position of the first write start pointer to the end position of the to-be-written message: releasing the mutual exclusion lock.

In some embodiments, the method further includes, prior to said modifying the initial position of the first write end pointer to the end position according to the size of the to-be-written message: determining that the initial position of the first write start pointer is the same as the initial position of the first write end pointer.

In some embodiments, the method further includes, prior to said modifying the initial position of the first write end pointer to the end position according to the size of the to-be-written message: in response to the initial position of the first write start pointer being different from the initial position of the first write end pointer, setting the initial position of the first write start pointer and the initial position of the first write end pointer to be the same.

In some embodiments, said setting the initial position of the first write start pointer and the initial position of the first write end pointer to be the same includes: updating the initial position of the first write start pointer to the initial position of the first write end pointer, or updating the initial position of the first write end pointer to the initial position of the first write start pointer.

In some embodiments, the method further includes, prior to said modifying the initial position of the first write end pointer to the end position according to the size of the to-be-written message: determining that the size of the to-be-written message is smaller than or equal to a size of the message storage area.

In some embodiments, the pointer information includes an initial position of a first write start pointer and an initial position of a first write end pointer; and said reading the message body from the message storage area or writing the message body to the message storage area based on the pointer information includes: reading the message body starting from an initial position of a second write end pointer until reaching the initial position of the first write end pointer. The initial position of the second write end pointer is an initial position of the first write end pointer from a previous reading operation.

In some embodiments, the method further includes, subsequent to said reading until reaching the initial position of the first write end pointer: obtaining the initial position of the first write end pointer from the queue header and determining that the initial position of the first write end pointer does not exceed a boundary of a read message; and/or obtaining the initial position of the first write end pointer from the queue header and discarding the read message in response to determining that the initial position of the first write end pointer exceeds the boundary of the read message.

In some embodiments, the method further includes, prior to said reading the message body starting from the initial position of the second write end pointer until reaching the initial position of the first write end pointer: determining that a message update is present in response to determining that an initial position of a second write start pointer is inconsistent with the initial position of the first write start pointer.

In some embodiments, a data structure of the message body includes a message header and a payload part, in which the message header includes length information of a payload; and the method further includes, prior to said reading the message body starting from the initial position of the second write end pointer until reaching the initial position of the first write end pointer: determining that a difference between the initial position of the first write start pointer and the initial position of the second write start pointer is greater than or equal to a length of the message header of the message body.

In some embodiments, the method further includes: determining that the difference between the initial position of the first write start pointer and the initial position of the second write start pointer is smaller than or equal to a size of the message storage area.

In some embodiments, said reading the message body starting from the initial position of the second write end pointer until reaching the initial position of the first write end pointer includes: parsing a message header of the message body from the initial position of the second write end pointer and obtaining length information of a payload in the message header, where the payload includes human-machine-environment data; and reading the payload based on the length information of the payload until reaching the initial position of the first write end pointer.

In some embodiments, a data structure of the message body further includes a topic identifier part; a message header further includes length information of a topic identifier; and the method further includes, prior to said reading the message body from the message storage area or writing the message body to the message storage area based on the pointer information: parsing the message header of the message body and obtaining the length information of the topic identifier in the message header; obtaining a topic corresponding to the message body based on the length information of the topic identifier; and determining that the topic matches a subscription list.

In some embodiments, said determining that the topic matches the subscription list includes: performing matching sequentially in an order of full matching, parameter matching, and wildcard matching based on a matching weight, until a match succeeds.

In some embodiments, the method further includes, prior to said parsing the message header of the message body and obtaining the length information of the topic identifier in the message header: determining that a recorded subscriber is present in the subscription list.

In some embodiments, the method further includes, prior to said determining that an entry is present in the subscription list: determining that the message header is correct.

In some embodiments, the method further includes, prior to said reading the message body starting from the initial position of the second write end pointer until reaching the initial position of the first write end pointer: determining that a cancellation token is valid.

In some embodiments, the method further includes, prior to said parsing the queue header of the message queue and obtaining the pointer information: applying for a shared memory space, and establishing a message queue in the shared memory space. The message queue includes: a queue header and a storage area.

In some embodiments, the human-machine-environment data includes human-related data, machine-related data, human-machine interaction-related data, or environment-related data. The human-related data includes one or a combination of: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data. The machine-related data includes one or a combination of: machine operation data, fault alarm data, machine manipulation data, machine model data, machine communication data, or machine positioning data. The human-machine interaction-related data includes one or a combination of: human-machine voice-interaction data, human-machine text-interaction data, human-machine touch-interaction data, human-machine gesture or action-interaction data, human-machine electroencephalogram-interaction data, human-machine eye-tracking-interaction data, or human-machine expression-interaction data. The environment-related data includes one or a combination of: location data, humidity data, temperature data, chromaticity data, brightness data, weather data, road condition data, traffic data, stimulus signal data, event or signal marking data.

In a second aspect, the embodiments of the present disclosure provide a human-machine-environment data communication apparatus. The human-machine-environment data communication apparatus includes: a parsing module configured to parse a queue header of a message queue and obtain pointer information, in which the message queue is established in a shared memory space and includes the queue header and a message storage area, in which the queue header includes the pointer information, and in which the message storage area is used to store a message body and the message body includes human-machine-environment data; and a processing module configured to read the message body from the message storage area or write the message body to the message storage area based on the pointer information.

In some embodiments, the pointer information includes an initial position of a first write start pointer and an initial position of a first write end pointer; and the processing module is specifically configured to: modify the initial position of the first write end pointer to an end position according to a size of a to-be-written message, in which a difference between the end position and the initial position is equal to the size of the to-be-written message; and write the to-be-written message starting from the initial position of the first write start pointer until the to-be-written message is completely written, and update the initial position of the first write start pointer to an end position of the to-be-written message.

In some embodiments, the processing module is further configured to obtain a mutual exclusion lock; and release the mutual exclusion lock.

In some embodiments, the processing module is further configured to determine that the initial position of the first write start pointer is the same as the initial position of the first write end pointer.

In some embodiments, the processing module is further configured to set, in response to the initial position of the first write start pointer being different from the initial position of the first write end pointer, the initial position of the first write start pointer and the initial position of the first write end pointer to be the same.

In some embodiments, the processing module is specifically configured to update the initial position of the first write start pointer to the initial position of the first write end pointer, or update the initial position of the first write end pointer to the initial position of the first write start pointer.

In some embodiments, the processing module is further configured to determine that the size of the to-be-written message is smaller than or equal to a size of the message storage area.

In some embodiments, the pointer information includes an initial position of a first write start pointer and an initial position of a first write end pointer; and the processing module is specifically configured to: read the message body starting from an initial position of a second write end pointer until reaching the initial position of the first write end pointer. The initial position of the second write end pointer is an initial position of the first write end pointer from a previous reading operation.

In some embodiments, the processing module is further configured to: obtain the initial position of the first write end pointer from the queue header and determine that the initial position of the first write end pointer does not exceed a boundary of a read message; and/or obtain the initial position of the first write end pointer from the queue header and discarde the read message in response to determining that the initial position of the first write end pointer exceeds the boundary of the read message.

In some embodiments, the processing module is further configured to determine that a message update is present in response to determining that an initial position of a second write start pointer is inconsistent with the initial position of the first write start pointer.

In some embodiments, a data structure of the message body includes a message header and a payload part, in which the message header includes length information of a payload; and the processing module is further configured to: determine that a difference between the initial position of the first write start pointer and the initial position of the second write start pointer is greater than or equal to a length of the message header of the message body.

In some embodiments, the processing module is further configured to determine that the difference between the initial position of the first write start pointer and the initial position of the second write start pointer is smaller than or equal to a size of the message storage area.

In some embodiments, the processing module is specifically configured to: parse a message header of the message body from the initial position of the second write end pointer and obtain length information of a payload in the message header, where the payload includes human-machine-environment data; and read the payload based on the length information of the payload until reaching the initial position of the first write end pointer.

In some embodiments, a data structure of the message body further includes a topic identifier part; a message header further includes length information of a topic identifier; and the processing module is further configured to: parse the message header of the message body and obtain the length information of the topic identifier in the message header; obtain a topic corresponding to the message body based on the length information of the topic identifier; and determine that the topic matches a subscription list.

In some embodiments, the processing module is specifically configured to perform matching sequentially in an order of full matching, parameter matching, and wildcard matching based on a matching weight, until a match succeeds.

In some embodiments, the processing module is specifically configured to determine that a recorded subscriber is present in the subscription list.

In some embodiments, the processing module is further configured to determine that the message header is correct.

In some embodiments, the processing module is further configured to determine that a cancellation token is valid.

In some embodiments, the processing module is further configured to apply for a shared memory space, and establish a message queue in the shared memory space. The message queue includes: a queue header and a storage area.

In some embodiments, the human-machine-environment data includes human-related data, machine-related data, human-machine interaction-related data, or environment-related data. The human-related data includes one or a combination of: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data. The machine-related data includes one or a combination of: machine operation data, fault alarm data, machine manipulation data, machine model data, machine communication data, or machine positioning data. The human-machine interaction-related data includes one or a combination of: human-machine voice-interaction data, human-machine text-interaction data, human-machine touch-interaction data, human-machine gesture or action-interaction data, human-machine electroencephalogram-interaction data, human-machine eye-tracking-interaction data, or human-machine expression-interaction data. The environment-related data includes one or a combination of: location data, humidity data, temperature data, chromaticity data, brightness data, weather data, road condition data, traffic data, stimulus signal data, event or signal marking data.

In a third aspect, the embodiments of the present disclosure provide an edge computing device. The edge computing device includes a processor and a memory. The memory stores a program or instructions executable on the processor. The program or the instructions, when executed by the processor, implements steps of the human-machine-environment data communication method as described in any of the items in the first aspect.

In a fourth aspect, the embodiments of the present disclosure provide a human-machine-environment data communication system. The human-machine-environment data communication system includes the edge computing device as described according to the third aspect. The edge computing device configures a message queue and/or a topic for a publisher and a subscriber to communicate based on the message queue and/or the topic.

In a fifth aspect, the embodiments of the present disclosure provide a computer-readable storage medium. The computer-readable storage medium stores a program or instructions. The program or the instructions, when executed by a processor, implements steps of the human-machine-environment data communication method as described in any of the items in the first aspect.

In a sixth aspect, the embodiments of the present disclosure provide a computer program product. The computer program product, when executed by a processor, implements steps of the human-machine-environment data communication method as described in any of the items in the first aspect.

The human-machine-environment data communication method, the human-machine-environment data communication apparatus, the human-machine-environment data communication system, the edge computing device, and the storage medium are provided according to the embodiments of the present disclosure. The message queue is established in the shared memory space and a data structure of the message queue is defined. A process may obtain the pointer information by parsing the queue header of the message queue, and read the message body from the message storage area or write the message body to the message storage area based on the pointer information, which combines an efficient access characteristic of a shared memory and high scalability, decoupling, and other advantages of the message queue, thereby improving efficiency of inter-process communication, and utilizes an asynchronous characteristic of the message queue, thereby improving concurrency of the inter-process communication.

### BRIEF DESCRIPTION OF THE DRAWINGS

FIG. 1 is a schematic diagram of a data structure of a message queue provided according to the embodiments of the present disclosure.
FIG. 2 is a schematic diagram of a data structure of a message body provided according to the embodiments of the present disclosure.
FIG. 3 is a schematic diagram of a data structure of another message body provided according to the embodiments of the present disclosure.
FIG. 4 is a schematic flowchart of a method for inter-process communication provided according to the embodiments of the present disclosure.
FIG. 5 is a schematic flowchart of a message writing process provided according to the embodiments of the present disclosure.
FIG. 6 is a schematic flowchart of another message writing process provided according to the embodiments of the present disclosure.
FIG. 7 is a schematic flowchart of yet another message writing process provided according to the embodiments of the present disclosure.
FIG. 8 is a schematic flowchart of still yet another message writing process provided according to the embodiments of the present disclosure.
FIG. 9 is a schematic flowchart of a message reading process provided according to the embodiments of the present disclosure.
FIG. 10 is a schematic flowchart of another message reading process provided according to the embodiments of the present disclosure.
FIG. 11 is a schematic flowchart of yet another message reading process provided according to the embodiments of the present disclosure.
FIG. 12 is a schematic flowchart of still yet another message reading process provided according to the embodiments of the present disclosure.
FIG. 13 is a schematic flowchart of another message reading process provided according to the embodiments of the present disclosure.
FIG. 14 is a schematic flowchart of a message reading process provided according to the embodiments of the present disclosure.
FIG. 15 is a schematic flowchart of a message reading process provided according to the embodiments of the present disclosure.
FIG. 16 is a schematic structural diagram of a human-machine-environment data communication apparatus provided according to the embodiments of the present disclosure.
FIG. 17 is a schematic structural diagram of an edge computing device in the embodiments of the present disclosure.

### DETAILED DESCRIPTION

Technical solutions according to embodiments of the present disclosure will be described clearly below in combination with accompanying drawings of the embodiments of the present disclosure. Obviously, the embodiments described below are a part of the embodiments of the present disclosure, rather than all embodiments of the present disclosure. On a basis of the embodiments of the present disclosure, all other embodiments obtained by those skilled in the art shall fall within the scope of the present disclosure.

Terms such as "first" and "second" in the present disclosure are used only to distinguish between similar objects, rather than to describe a particular order or sequence. It should be understood that the terms as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or a plurality of first objects. In addition, "or" throughout the present disclosure indicates at least one of the objects associated with " or". For example, "A or B" may indicate that three cases where A is included while B is excluded, B is included while A is excluded, and both A and B are included. The character "/" generally indicates that the associated objects before and after the character are in an "or" relationship.

The term "indicate" in the present disclosure may be a direct indication (or explicit indication) or an indirect indication (or implicit indication). The direct indication may be understood as that a transmitter clearly notifies a receiver of specific information, an operation needing to be performed, a request result, and the like, in the transmitted indication. The indirect indication may be understood as that the receiver determines the corresponding information based on the indication transmitted by the transmitter, or makes a determination based on the indication transmitted by the transmitter and determines, based on the determination result, the operation needing to be performed, the request result, or the like.

In the embodiments of the present disclosure, a message queue is established in a shared memory to perform inter-process communication, thereby improving message access efficiency.

In the embodiments of the present disclosure, a shared memory space is applied for, and a message queue is established in the shared memory space. The message queue includes a queue header and a message storage area.

An implementation manner of establishing the message queue in the shared memory in the embodiments of the present disclosure includes, but is not limited to, the following possible implementation manners:

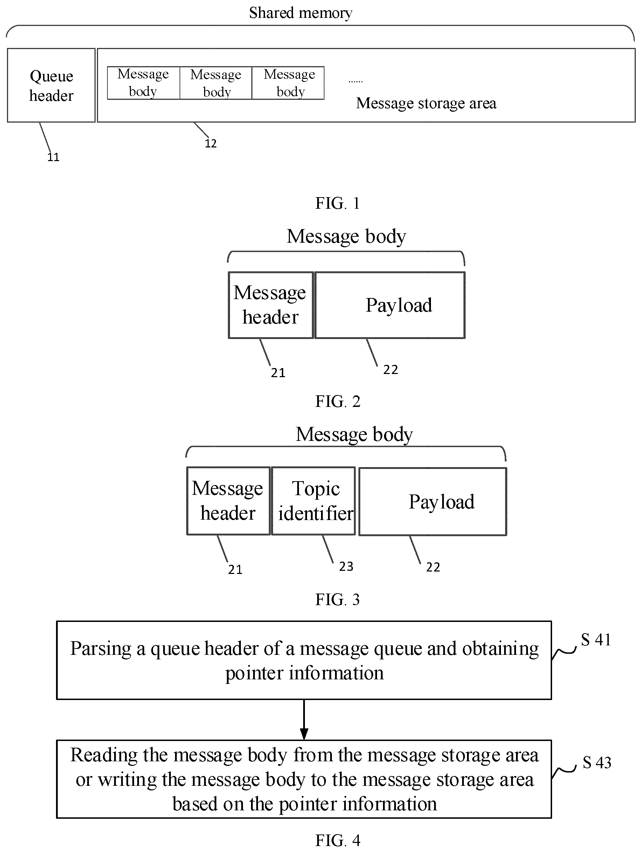

FIG. 1 is a schematic diagram of a data structure of a message queue provided according to the embodiments of the present disclosure. As shown in FIG. 1, a queue header 11 is defined in the shared memory. The queue header 11 is used to store pointer information, and the pointer information may specifically be a write start pointer (also referred to as a head pointer) and a write end pointer (also referred to as a tail pointer). A message storage area 12 is defined in the shared memory and is used to store a message body. The message body includes human-machine-environment data. In this way, the establishment of the message queue in the shared memory is realized.

In some embodiments, the human-machine-environment data includes human-related data, machine-related data, human-machine interaction-related data, or environment-related data. The human-related data includes one or a combination of: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data. The machine-related data includes one or a combination of: machine operation data, fault alarm data, machine manipulation data, machine model data, machine communication data, or machine positioning data. The human-machine interaction-related data includes one or a combination of: human-machine voice-interaction data, human-machine text-interaction data, human-machine touch-interaction data, human-machine gesture or action-interaction data, human-machine electroencephalogram-interaction data, human-machine eye-tracking-interaction data, or human-machine expression-interaction data. The environment-related data includes one or a combination of: location data, humidity data, temperature data, chromaticity data, brightness data, weather data, road condition data, traffic data, stimulus signal data, event or signal marking data.

In the embodiments of the present disclosure, a data structure of the message body is further defined. The data structure of the message body includes, but is not limited to, the following possible implementation manners:

A possible implementation manner is shown in FIG. 2. FIG. 2 is a schematic diagram of a data structure of a message body provided according to the embodiments of the present disclosure. The message body includes a message header 21 and a payload part 22. The message header includes length information of a payload, and the payload part is used to carry a message content. The payload includes human-machine-environment data. The data structure of the message body may be applied to general inter-process communication, such as Internet of Things (IoT) device communication, a real-time monitoring system, or a traffic simulation system.

Another possible implementation manner is shown in FIG. 3. FIG. 3 is a schematic diagram of a data structure of another message body provided according to the embodiments of the present disclosure. FIG. 3 is with a topic identifier part 23 based on the data structure of the message body shown in FIG. 2. The topic identifier part is used to carry topic identifier information, and the message header further includes length information of a topic identifier. The data structure of the message body may be applied to some scenarios, such as the inter-process communication based on a topic. The inter-process communication based on the topic may improve system flexibility, scalability, and decoupling. For example, the data structure of the message body may be applied to a message subscription and publication library, and a message subscriber and publisher write and read a message based on the topic, such as in the traffic simulation system.

Based on the data structure of the message queue and the data structure of the message body shown in FIG. 1 to FIG. 3 and provided according to the embodiments of the present disclosure, a method for performing the inter-process communication is shown in FIG. 4. FIG. 4 is a schematic flowchart of a method for inter-process communication provided according to the embodiments of the present disclosure. The method of this embodiment includes operations at blocks S41 and S43.

At block S41, a queue header of a message queue is parsed, and pointer information is obtained.

The message queue is established in the shared memory space, and the data structure of the message queue is as shown in FIG. 1. When a process needs to read or write a message, the queue header of the message queue is parsed, and the pointer information is obtained.

At block S43, the message body is read from the message storage area or written to the message storage area based on the pointer information.

Based on the pointer information, it can be determined whether a message update is present in the message queue, or an end position of the update message in the message queue can be determined, or a start position for writing the message to the message queue can be determined, or the like. Therefore, when the process needs to read or write the message body, the message body is read from the message storage area or written to the message storage area based on the pointer information.

In this embodiment, the message queue is established in the shared memory space and the data structure of the message queue is defined. The process may obtain the pointer information by parsing the queue header of the message queue, and read the message body from the message storage area or write the message body to the message storage area based on the pointer information, which combines an efficient access characteristic of the shared memory and high scalability, decoupling, and other advantages of the message queue, thereby improving efficiency of inter-process communication, and utilizes an asynchronous characteristic of the message queue, thereby improving concurrency of the inter-process communication.

The inter-process communication generally involves message writing and reading processes. Writing and reading processes of the message queue established in the shared memory are described below.

During the writing and reading processes, obtaining the write start pointer and/or write end pointer from the queue header may be involved. The process itself records the write start pointer and/or write end pointer locally. For ease of description, in the following embodiments of the present disclosure, the write start pointer stored in the queue header is referred to as a first write start pointer, and the write end pointer stored in the queue header is referred to as a first write end pointer. Moreover, the write start pointer recorded locally by the process is referred to as a second write start pointer, and the write end pointer recorded locally by the process is referred to as a second write end pointer.

During the writing process, positions indicated by the first write start pointer and the first write end pointer will be updated. For ease of description, before the writing process starts, the position indicated by the first write start pointer is referred to as an initial position of the first write start pointer, and the position indicated by the first write end pointer is referred to as an initial position of the first write end pointer. During the writing process, an end position of writing is determined based on a size of a to-be-written message, and the initial position of the first write end pointer and the initial position of the first write start pointer are updated based on the end position of writing.

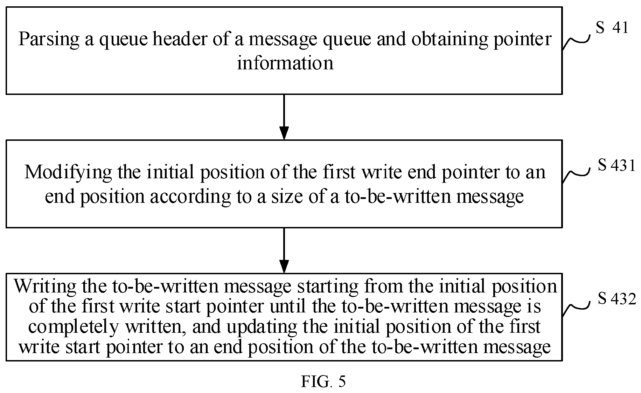

Different embodiments of a message writing process provided according to the embodiments of the present disclosure are described below in FIG. 5 to FIG. 8.

FIG. 5 is a schematic flowchart of a message writing process provided according to the embodiments of the present disclosure. FIG. 5 is a description of a possible implementation manner of operation at block S43 based on the example shown in FIG. 4. As shown in FIG. 5, the process of this embodiment is as follows.

At block S431, the initial position of the first write end pointer is modified to an end position according to a size of a to-be-written message.

A difference between the end position and the initial position is equal to the size of the to-be-written message.

When the process needs to write a message, a required memory space is determined according to the size of the to-be-written message. Then, an end position of writing is determined based on the required memory space, and the initial position of the first write end pointer is modified to the end position.

For example, when the initial position of the first write end pointer is 0x1000 and the size of the to-be-written message is 200 bytes, based on the initial position of the first write pointer and the size of the to-be-written message, the end position may be determined as 0x1000 plus 200 bytes, i.e., 0x1140. In this way, the initial position of the first write end pointer is offset backwards by 200 bytes, i.e., updated from 0x1000 to 0x1140.

At block S433, the to-be-written message is written starting from the initial position of the first write start pointer until the to-be-written message is completely written, and the initial position of the first write start pointer is updated to an end position of the to-be-written message.

Combined with the previous example, it is assumed that the initial position of the first write start pointer is 0x1000 and the size of the to-be-written message is 200 bytes. In this way, the process will start writing the message from a shared memory address 0x1000. After all 200 bytes of the to-be-written message are completely written, an end position at which the to-be-written message is completely written is 0x1140. The initial position of the first write start pointer is updated to the end position of the to-be-written message, i.e., 0x1140, meaning that the initial position of the first write start pointer is updated from 0x1000 to 0x1140.

In this embodiment, the initial position of the first write end pointer is modified to the end position according to the size of the to-be-written message, the to-be-written message is written starting from the initial position of the first write start pointer until the to-be-written message is completely written, and the initial position of the first write start pointer is updated to the end position of the to-be-written message, and thus a writing process of the message queue based on the shared memory is completed, improving message writing efficiency.

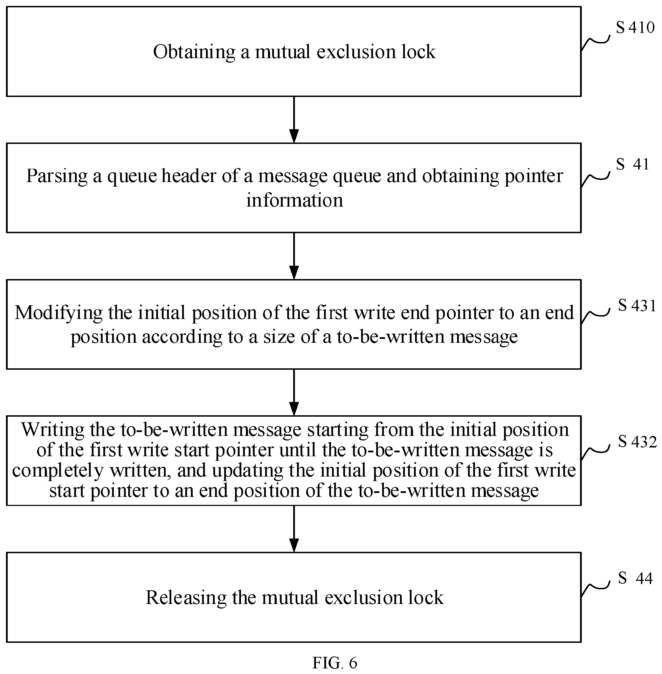

In the embodiments of the present disclosure, the inter-process communication of the message queue based on the shared memory has a concurrency problem. In order to ensure validity of written data and read data, the embodiments of the present disclosure may perform concurrency control through, but not limited to, the following possible implementation manners such as a read-write lock, a sequence lock, a spin lock, or a mutual exclusion lock to ensure the validity of the written data and read data. The technical solution of the embodiments of the present disclosure is described below by taking the use of the mutual exclusion lock for concurrency control during the writing process as an example. FIG. 6 is based on the embodiment shown in FIG. 5. As shown in FIG. 6, the process may further include an operation at block S410 before an operation at block S41, and further include an operation at block S44 after an operation at block S433.

At block S410, a mutual exclusion lock is obtained.

When the process needs to write a message, the mutual exclusion lock is obtained. After the process obtains the mutual exclusion lock, it means that no other process may perform a writing operation before the process releases the mutual exclusion lock, thereby ensuring data consistency during the writing process. After the process obtains the mutual exclusion lock, in response to other processes attempting to obtain the same mutual exclusion lock, the other processes will be blocked or suspended until the process completes writing and releases the mutual exclusion lock.

After the process successfully obtains the mutual exclusion lock, the process starts to write the to-be-written data. After the to-be-written data is completed, an operation at block S44 is executed.

At block S44, the mutual exclusion lock is released.

When the process completes data writing, the process performs the operation of releasing the mutual exclusion lock, meaning that other processes waiting to obtain the mutual exclusion lock or subsequent processes requesting to obtain the mutual exclusion lock will have the opportunity to obtain the mutual exclusion lock and start the writing operation.

In this embodiment, the process obtains the mutual exclusion lock before starting to write the data and releases the mutual exclusion lock after completing the data writing. In this way, the data consistency during the writing process is ensured.

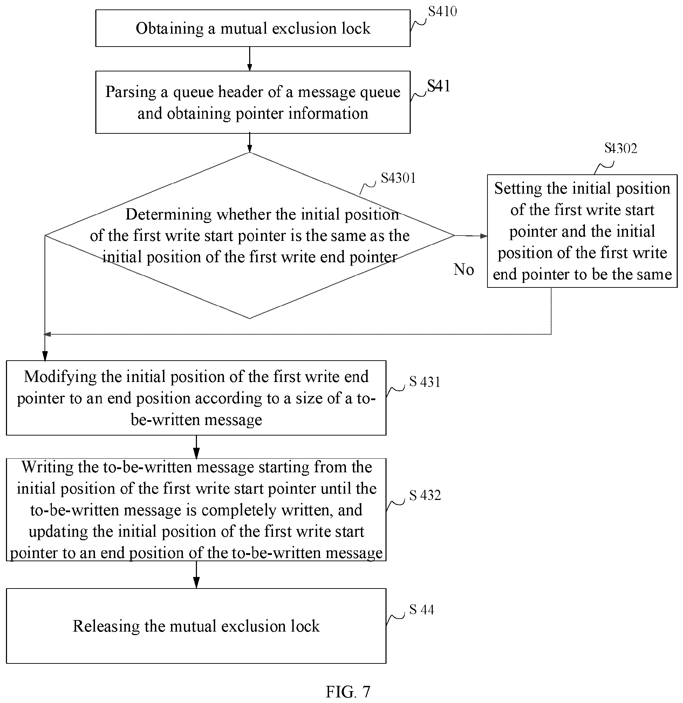

In some cases, a writing abnormality may occur, which may cause the initial position of the first write start pointer to be inconsistent with the initial position of the first write end pointer. The writing abnormality indicates that previous written data is invalid, so the previous written data needs to be ignored or overwritten. Therefore, before writing starts, the initial position of the first write start pointer the initial position of the first write end pointer needs to be set the same. FIG. 7 is based on the embodiment shown in FIG. 6. As shown in FIG. 7, the process further includes an operation at block S4301 and an operation at block S4302 before an operation at block S431.

At block S4301, it is determined whether the initial position of the first write start pointer is the same as the initial position of the first write end pointer. In response to determining that the initial position of the first write start pointer is the same as the initial position of the first write end pointer, an operation at block S431 is executed. In response to determining that the initial position of the first write start pointer is different from the initial position of the first write end pointer, an operation at block S4302 is executed.

At S4302, the initial position of the first write start pointer and the initial position of the first write end pointer are set to be the same.

In some embodiments, an implementation manner is to update the initial position of the first write start pointer to the initial position of the first write end pointer.

For example, when the initial position of the first write start pointer is 0x1000 and the initial position of the first write end pointer is 0x1100, the initial position of the first write start pointer is updated from 0x1000 to 0x1100.

Another implementation manner is to update the initial position of the first write end pointer to the initial position of the first write start pointer.

Combined with the previous example, the initial position of the first write end pointer is updated from 0x1100 to 0x1000.

In this embodiment, by setting the initial position of the first write start pointer and the initial position of the first write end pointer to be the same before the writing starts, an abnormality of the current data writing caused by the abnormality of the previous data writing is avoided.

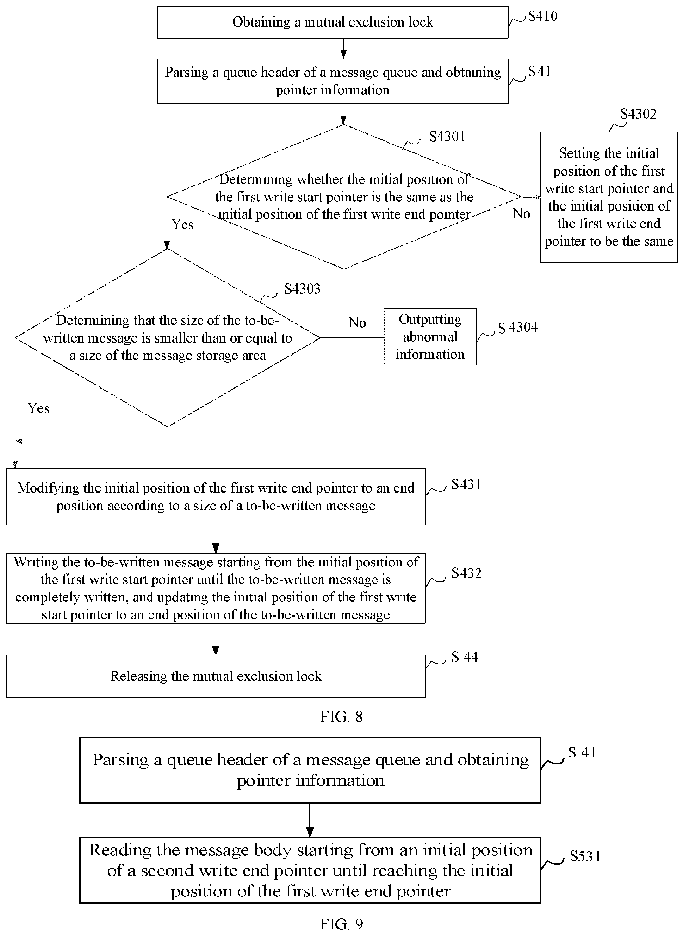

In some cases, a too large size of the to-be-written message may occur in some processes, and the size of the to-be-written message exceeds a size of the message storage area, resulting in a case of incomplete message writing, i.e., a case where the initially written message is overwritten by the subsequently written message. In order to avoid this case, as shown in FIG. 8 in the embodiments of the present disclosure, before the message is written, an operation at block S4303 is further executed.

At block S4303, it is determined whether the size of the to-be-written message is smaller than or equal to a size of the message storage area.

In response to determining that the size of the to-be-written message is smaller than or equal to the size of the message storage area, an operation at block S431 is executed. In response to determining that the size of the to-be-written message is greater than the size of the storage area, an operation at block S4304 is executed.

At block S4304, abnormal information is outputted.

In this embodiment, it is determined whether the size of the to-be-written message is smaller than or equal to the size of the message storage area before the message is written, to determine whether to perform the writing operation. In this way, a case of incomplete message writing caused by a too large message is avoided, and validity of message writing is determined.

Different embodiments of a message reading process provided according to the embodiments of the present disclosure are described below in FIG. 9 to FIG. 15.

FIG. 9 is a schematic flowchart of a message reading process provided according to the embodiments of the present disclosure. FIG. 9 is a description of another possible implementation manner of an operation at block S43 based on the example shown in FIG. 4. As shown in FIG. 9, the process of this embodiment is as follows.

At block S531, the message body is read starting from an initial position of a second write end pointer until reaching the initial position of the first write end pointer.

The initial position of the second write end pointer is an initial position of the first write end pointer from a previous reading operation.

After the process ends each message reading, the process records the initial position of the first write end pointer and the initial position of the first write start pointer of the read message locally. The message header of the message body is parsed from the initial position of the second write end pointer, and the length information of the payload in the message header is obtained. The payload is read based on the length information of the payload until the initial position of the first write end pointer is reached.

For example, it is assumed that a process records that the initial position of the first write end pointer is the memory address 0x1000 in the previous reading operation, and the address is an end position of the previous message reading. When reading the message next time, the process will use this address as the initial position of the second write end pointer. The process starts to parse the message body from the address 0x1000, and reads the message header to obtain the length information of the payload. Once a length of the payload is obtained, the process starts to read the data from the current position according to the length of the payload until reaching the initial position of the first write end pointer in this reading operation, which is assumed to be the memory address 0x1500. In this way, the process completes the reading of the entire message body from the end position of the previous message to the end position of the current message.

In this embodiment, through the initial position of the second write end pointer and the initial position of the first write end pointer, it is determined that the message body is read starting from the initial position of the second write end pointer until reaching the initial position of the first write end pointer, to implement the reading operation of the message queue based on the shared memory.

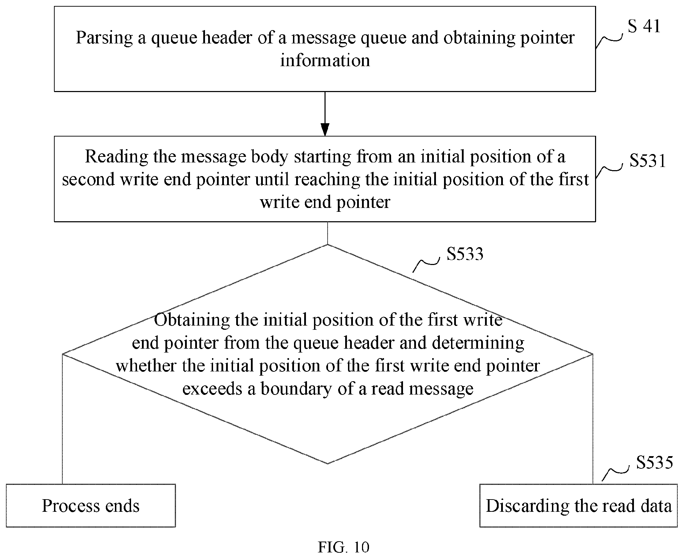

The technical solution provided according to the embodiments of the present disclosure supports parallel reading and writing operation. Therefore, it may occur that during the reading process, other processes may perform the writing operation, which may cause data being read by the current reading operation to be overwritten. Therefore, in order to ensure the validity of the read message, the embodiment of the present disclosure is based on the embodiment shown in FIG. 9. Further, as shown in FIG. 10, the process further include executing an operation at block S533 after the reading ends.

At block S533, the initial position of the first write end pointer is obtained from the queue header, and it is determined whether the initial position of the first write end pointer exceeds a boundary of a read message. In response to determining that the initial position of the first write end pointer exceeds the boundary of the read message, an operation at block S535 is executed. In response to determining that the initial position of the first write end pointer does not exceed the boundary of the read message, the process ends.

For example, it is assumed that the size of the message storage area is 4,000 bytes. At a certain moment, the process records that the initial position of the second write start pointer is a memory address 0x3000. After that, due to a high-frequency writing operation, the initial position of the first write start pointer is updated to 0x5000. At this time, a difference between the first write start pointer and the second write start pointer is 2,000 bytes, which is smaller than the size of the message storage area. Therefore, the process can safely read the message from the initial position 0x3000 of the second write start pointer until the current position 0x5000 of the first write start pointer.

However, in response to an additional writing operation occurring during this process, the initial position of the first write start pointer is caused to be further updated to 0x8000. At this time, the difference between the first write start pointer and the second write start pointer becomes 5,000 bytes, exceeding the size of the message storage area. In this case, since the message storage area is designed as a circular buffer area, some of the earliest messages may have been overwritten by newly written messages. Therefore, message data starting from the initial position 0x3000 of the second write start pointer is no longer valid. Therefore, the initial position of the first write end pointer obtained from the queue header is 0x8000, exceeding the boundary of the read message, i.e., the read message has become invalid data.

At block S535, the read message is discarded.

In response to determining that the initial position of the first write end pointer exceeds the boundary of the read message, a data content read by the current reading operation may have been overwritten by the writing operation, so the read data content is the invalid data.

In this embodiment, it is determined that the initial position of the first write end pointer does not exceed the boundary of the read message by obtaining the initial position of the first write end pointer from the queue header, to ensure the validity of the read message.

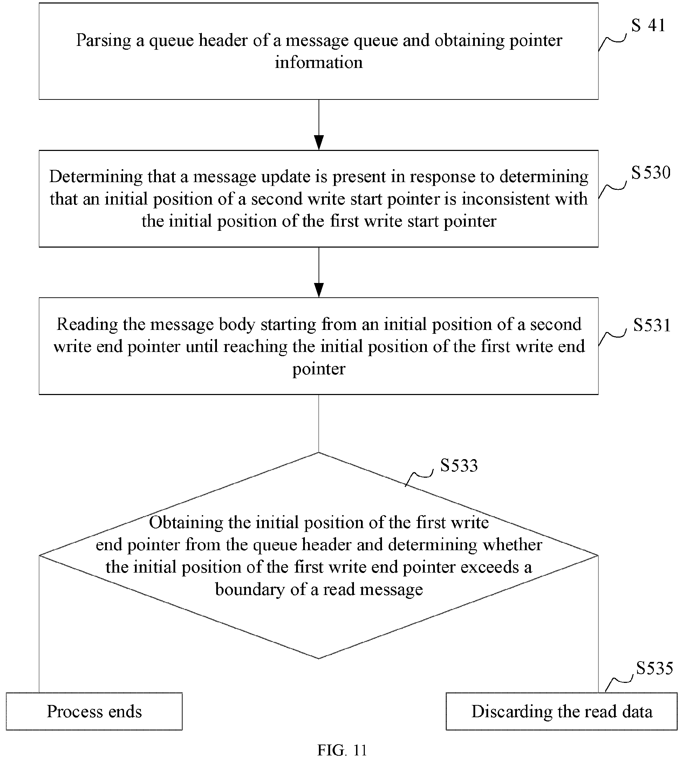

FIG. 11 is a schematic flowchart of yet another message reading process provided according to the embodiments of the present disclosure. FIG. 11 is based on the embodiment shown in FIG. 10. Further, the process further includes determining whether a message update is present in the message queue before the message is read. A possible implementation manner is shown in FIG. 11. Before an operation at block S531 is executed, the process further includes executing an operation at block S530.

At block S530, it is determined that a message update is present in response to determining that an initial position of a second write start pointer is inconsistent with the initial position of the first write start pointer.

Since each writing operation updates the initial position of the first write start pointer, it can be determined whether the message update is present based on the determination of whether the initial position of the first write start pointer is consistent with the initial position of the second write start pointer.

For example, in a specific implementation scenario, the process checks an initial position of the current second write start pointer, which is recorded by the process after performing the previous reading operation. In response to this position being inconsistent with an initial position of the current first write start pointer, it indicates that a new message has been written to the message queue since the previous reading. This manner may allow the process to quickly determine whether a new message has arrived between two reading operations without additional polling or waiting. In response to the positions of the first write start pointer and the second write start pointer being the same, it can be considered that no new message has arrived since the previous check, and the process can choose not to perform the reading operation, thereby saving resources and improving efficiency.

For example, at a certain time point, after the process completes a reading operation, the process records the initial position of the second write start pointer as the memory address 0x2000. Before the next reading operation, the process checks the initial position of the first write start pointer at this time and finds out that the initial position has moved to a new memory address 0x2500. This change indicates that a new message has been written between the two addresses. Therefore, the process will start reading from the initial position 0x2000 of the second write start pointer until the new position 0x2500, and obtain all messages that have arrived during this period.

In this embodiment, by determining that the initial position of the second write start pointer is inconsistent with the initial position of the first write start pointer, it is determined that the message update is present, such that it is determined whether a message update is present. In this way, high efficiency and timeliness of the message reading operation can be ensured, enabling the process to accurately know that a new message has arrived and process the new message in a timely manner.

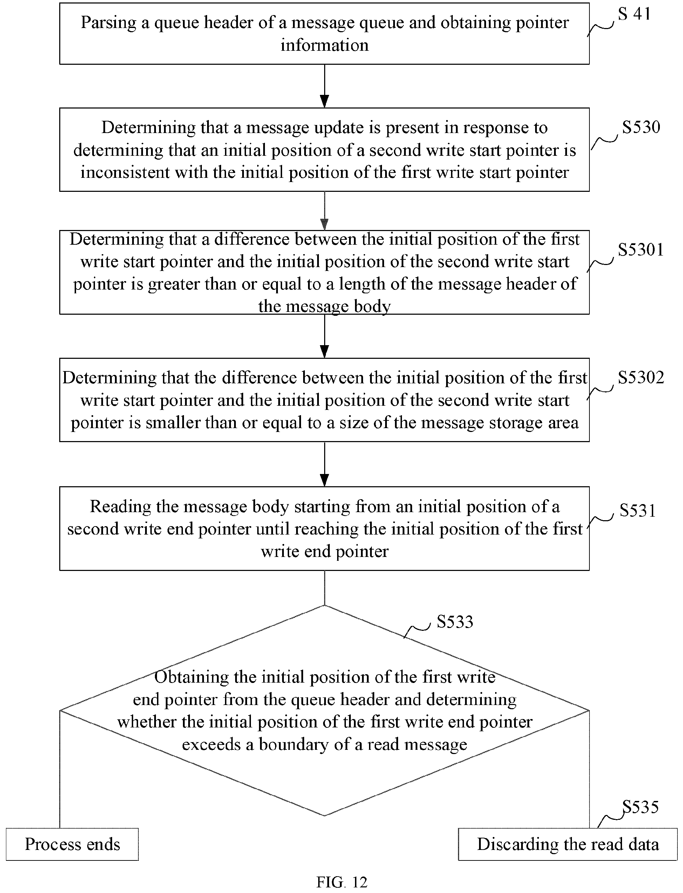

Since each message includes a message header, and a size of the message header is fixed, such as 12 bytes, in response to a difference between the initial position of the first write start pointer and the initial position of the second write start pointer being smaller than a length of the message header of the message body, it indicates that the written message is invalid. In order to avoid reading such the invalid data, as shown in FIG. 12, after an operation at block S530 is executed, an operation at block S5301 is further executed.

At block S5301, it is determined that a difference between the initial position of the first write start pointer and the initial position of the second write start pointer is greater than or equal to a length of the message header of the message body.

In response to determining that the difference between the initial position of the first write start pointer and the initial position of the second write start pointer is greater than or equal to the length of the message header of the message body, an operation at block S531 is executed. In response to determining that the difference between the initial position of the first write start pointer and the initial position of the second write start pointer is equal to the length of the message header of the message body, which indicates that no valid message update is present in the message queue, block S530 is returned to.

In this embodiment, by determining whether the difference between the initial position of the first write start pointer and the initial position of the second write start pointer is greater than or equal to the length of the message header of the message body, it is determined whether the updated data is valid, to avoid an unnecessary reading process and resource waste.

In some cases, it may occur that the difference between the initial position of the first write start pointer and the initial position of the second write start pointer is greater than the size of the message storage area. This case may occur when the message is not read in a timely manner. For example, after the previous reading, two or more writing operations have occurred, and a total size of the written data has exceeded the size of the message storage area. Therefore, the process further includes an operation at block S5302 before the data is read.

At block S5302, it is determined that the difference between the initial position of the first write start pointer and the initial position of the second write start pointer is smaller than or equal to a size of the message storage area.

In response to determining that the difference between the initial position of the first write start pointer and the initial position of the second write start pointer is smaller than or equal to the size of the message storage area, the data may be read. In response to determining that the difference between the initial position of the first write start pointer and the initial position of the second write start pointer is greater than the size of the message storage area, it indicates that the total size of the written data has exceeded the size of the message storage area, and thus the message is invalid.

For example, it is assumed that the size of the message storage area is 4,000 bytes. At a certain moment, the process records that the initial position of the second write start pointer is the memory address 0x3000. After that, due to the high-frequency writing operation, the initial position of the first write start pointer is updated to 0x5000. At this time, the difference between the first write start pointer and the second write start pointer is 2,000 bytes, which is smaller than the size of the message storage area. However, before the message reading process performs this reading operation, an additional writing operation occurs, causing the initial position of the first write start pointer to be further updated to 0x8000. At this time, the difference between the first write start pointer and the second write start pointer becomes 5,000 bytes, exceeding the size of the message storage area. In this case, since the message storage area is designed as the circular buffer area, some of the earliest messages may have been overwritten by newly written messages. Therefore, the message data starting from the initial position 0x3000 of the second write start pointer is no longer valid.

In this embodiment, by comparing the difference between the first write start pointer and the second write start pointer with the size of the message storage area, it is determined whether the data may be read from the position of the second write start pointer. In response to the difference being within an allowable range, it indicates that a message between this position and the position of the first write start pointer is complete and valid. In response to the difference exceeding the size of the message storage area, it indicates that data overwritten has occurred, and the data is invalid.

In some embodiments, in order to ensure the validity of the read message, before the message is read, it is further determined whether the message header is correct based on checksum in the message header.

An inter-process communication mechanism of the message queue based on the shared memory in the embodiments of the present disclosure may be applied to a publish-subscribe mode. The publish-subscribe mode includes a publisher and a subscriber. The publisher is responsible for transmitting a message, while the subscriber subscribes to a message topic of interest.

In the publish-subscribe mode, the message is not directly transmitted to a specific receiver but is published to a topic. The topic is an identifier or label used to classify messages.

The publishers are entities transmitting messages. The publishers publish messages to specific topics without knowing which subscribers will receive these messages. The publishers only focus on generating messages and publishing the messages. The subscribers are entities receiving messages. The subscribers express their interest in these topic messages by subscribing to one or more of these topics. When messages are published to these topics, the subscribers are notified and process the messages as needed. When the subscriber receives a message that matches its subscribed topic, the subscriber executes an associated delegate. The delegate is a callback function defined by the subscriber to process the received message. When subscribing to a corresponding topic, the subscriber sets a corresponding delegate based on the subscribed topic. Once a topic match is successful, the corresponding delegate is executed to notify the subscriber.

In the message queue established based on the shared memory according to the embodiments of the present disclosure, each topic corresponds to a message queue. The publisher writes the message to a queue corresponding to the topic, while the subscriber reads the message from the corresponding queue.

A reading process of a message applied in the publish-subscribe mode is described below through a specific embodiment.

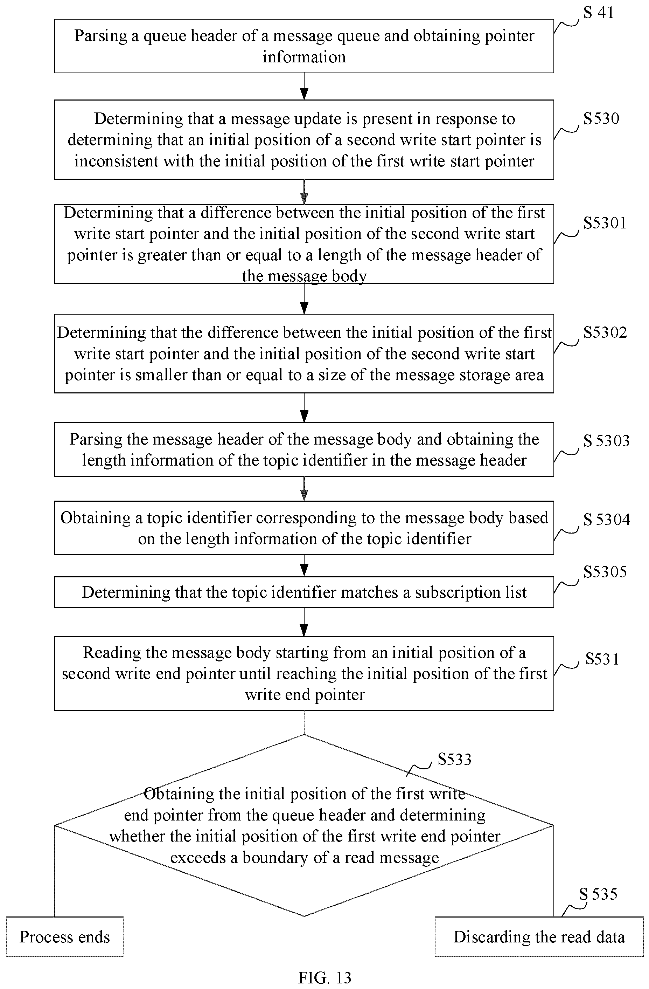

FIG. 13 is a schematic flowchart of another message reading process provided according to the embodiments of the present disclosure. FIG. 13 is based on the embodiment shown in FIG. 12. As shown in FIG. 13, the process further includes operations at blocks S5303 to S5305 before an operation at block S531.

At block S5303, the message header of the message body is parsed, and the length information of the topic identifier in the message header is obtained.

Since the message header in this embodiment of the present disclosure includes the length information of the topic identifier, after the message header of the message body is parsed, the length information of the topic identifier can be obtained at the corresponding position.

At block S5304, the topic identifier corresponding to the message body is obtained based on the length information of the topic identifier.

Based on the length information of the topic identifier, a specific byte range of the topic identifier in the message body is determined, and a topic identifier corresponding to the message body is obtained.

At block S5305, it is determined that the topic identifier matches a subscription list.

In response to determining that the topic identifier matches the subscription list, it means that a corresponding subscriber subscribes to the topic, and an operation at the block of reading the message continues to be executed. In response to determining that the topic identifier does not match the subscription list, it means that no corresponding subscriber subscribes to the topic, and thus there is no need to continue to execute the reading operation at block.

In this embodiment, by parsing the message header of the message body, the length information of the topic identifier in the message header is obtained. Based on the length information of the topic identifier, the topic identifier corresponding to the message body is obtained. In response to determining that the topic identifier matches the subscription list, the operation at block of reading the message continues to be executed. In response to determining that the topic identifier does not match the subscription list, it means that no corresponding subscriber subscribes to the topic, and thus there is no need to continue to execute the reading operation at block. Therefore, the inter-process communication manner provided in this embodiment of the present disclosure can be applied to the publish-subscribe mode.

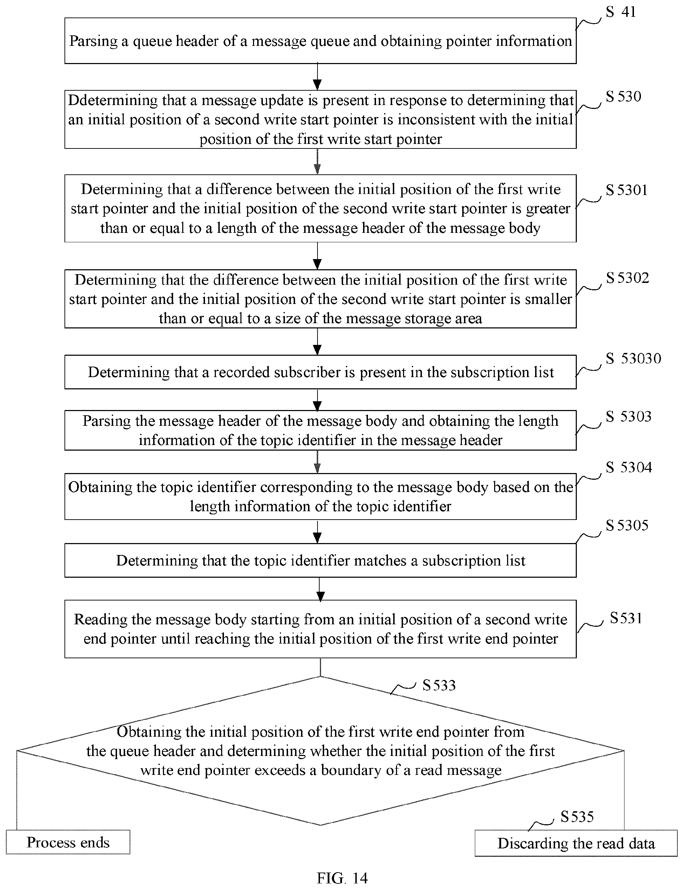

FIG. 14 is a schematic flowchart of another message reading process provided according to the embodiments of the present disclosure. FIG. 14 is based on the embodiment shown in FIG. 13. Further, the process further includes an operation at block S53030 before an operation at block S5303.

At block S53030, it is determined that a recorded subscriber is present in the subscription list.

The subscription list includes a registered subscriber and a topic that the subscriber is interested in. In response to an entry being present in the subscription list, it means that a subscriber is present. In response to no entry being present in the subscription list, it means that no subscriber is interested in the topic, and thus there is no need to continue to read the message.

In this embodiment, by determining whether a subscriber is present in the subscription list, it can be determined early whether it is necessary to read the message in the message queue, thereby avoiding the resource waste.

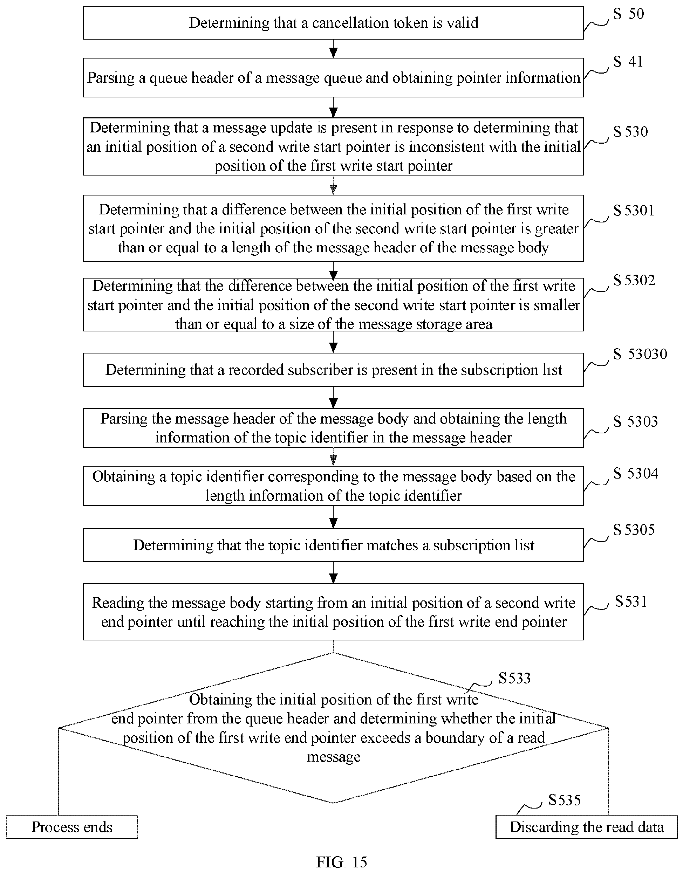

FIG. 15 is a schematic flowchart of another message reading process provided according to the embodiments of the present disclosure. FIG. 15 is based on the embodiment shown in FIG. 14. Further, the process further includes an operation at block S50 before an operation at block S41.

At block S50, it is determined whether a cancellation token is valid.

The cancellation token is a mechanism used to control whether the message reading operation should continue. The valid cancellation token indicates that the current message reading operation is still authorized and should continue. In response to the cancellation token being invalid, it means that an external condition or a user has instructed that the operation should stop or be cancelled.

In this embodiment, by checking a state of the cancellation token at the beginning of the message reading process, a message processing process may be flexibly controlled. In response to the cancellation token being valid, the system will continue to execute the subsequent message reading operation at block. In response to the cancellation token being invalid, the system will stop further message reading and processing.

The human-machine-environment data communication method provided according to the embodiments of the present disclosure may support asynchronous communication. After transmitting the message, the transmitter may continue to perform other operations without waiting for a response from the receiver. That is, the transmitter does not need to be blocked due to waiting for a message determination from the receiver. Through the asynchronous communication, a concurrency capability and a response speed of the system may be improved.

In the embodiments of the present disclosure, the asynchronous communication is achieved by establishing the message queue in the shared memory. The transmitter writes the message to the message queue in the shared memory, and the receiver, when ready, asynchronously reads the message from the message queue in the shared memory. In this way, transmission efficiency can be improved. Moreover, using an asynchronous communication mechanism can avoid blocking the main thread, which can improve operation smoothness of the system.

The human-machine-environment data communication method provided according to the embodiments of the present disclosure may be suitable for a scenario with high concurrency and high transmission efficiency, such as IoT device communication, a real-time monitoring system, a traffic simulation system, or other scenarios.

The embodiments of the present disclosure further provide a human-machine-environment data communication system that includes an edge computing device. The edge computing device configures a message queue and/or a topic for a publisher and a subscriber to communicate based on the message queue and/or the topic. Specifically, the human-machine-environment data communication system includes a transmitter and a receiver. After the transmitter obtains data, serialization is performed on the data through a serialization component. The serialization component may serialize the data in a serialization manner agreed upon with the receiver. The serialization manner includes, but is not limited to, JSON (JavaScript Object Notation), MemoryPack, MessagePack, or BufferOwner. Then, a corresponding message channel type is selected for the serialized message. A message channel type includes a channel of the message queue based on the shared memory. The channel of the message queue based on the shared memory is selected by using the human-machine-environment data communication method shown in FIG. 1 to FIG. 15 described above. The receiver determines a channel type for receiving data, parses the data in the channel, obtains the topic identifier, and performs subscription matching of the topic identifier through a subscription manager. The subscription manager maintains a subscription list that contains a registered subscriber and a topic that the registered subscriber is interested in. Deserialization is performed through the serialization component in a manner agreed upon with the transmitter. Then, the corresponding delegate is executed, i.e., a callback function or processing logic provided by the matched subscriber in the subscription manager when the matched subscriber registers the subscription.

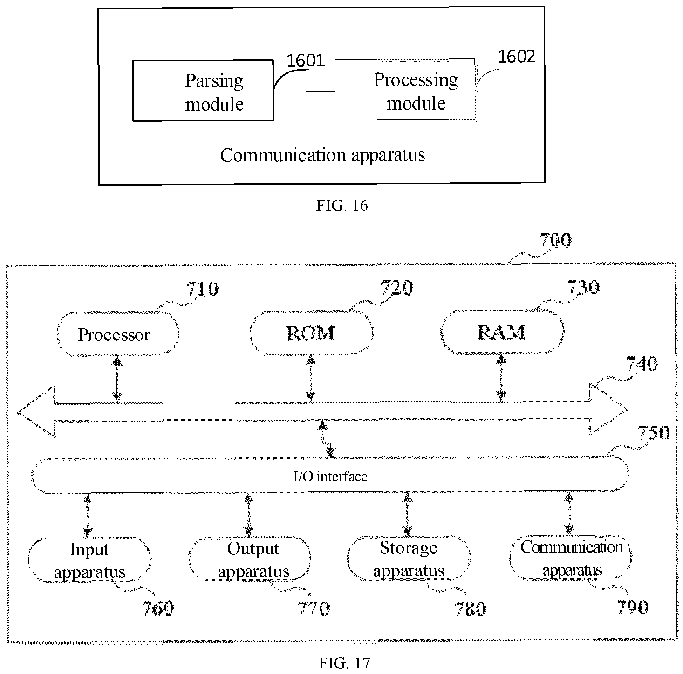

FIG. 16 is a schematic structural diagram of a human-machine-environment data communication apparatus provided according to the embodiments of the present disclosure. As shown in FIG. 16, the apparatus of this embodiment includes a parsing module 1601 and a processing module 1602. The parsing module 1601 is configured to parse a queue header of a message queue and obtain pointer information. The message queue is established in a shared memory space and includes a queue header and a message storage area. The queue header includes the pointer information, and the message storage area is used to store a message body and the message body includes human-machine-environment data. The processing module 1602 is configured to read the message body from the message storage area or write the message body to the message storage area based on the pointer information.

In some embodiments, the pointer information includes an initial position of a first write start pointer and an initial position of a first write end pointer.

The processing module 1602 is specifically configured to: modify the initial position of the first write end pointer to an end position according to a size of a to-be-written message, in which a difference between the end position and the initial position is equal to the size of the to-be-written message; and write the to-be-written message starting from the initial position of the first write start pointer until the to-be-written message is completely written, and update the initial position of the first write start pointer to an end position of the to-be-written message.

In some embodiments, the processing module 1602 is further configured to obtain a mutual exclusion lock and release the mutual exclusion lock.

In some embodiments, the processing module 1602 is further configured to determine that the initial position of the first write start pointer is the same as the initial position of the first write end pointer.

In some embodiments, the processing module 1602 is further configured to set, in response to the initial position of the first write start pointer being different from the initial position of the first write end pointer, the initial position of the first write start pointer and the initial position of the first write end pointer to be the same.

In some embodiments, the processing module 1602 is specifically configured to: update the initial position of the first write start pointer to the initial position of the first write end pointer, or update the initial position of the first write end pointer to the initial position of the first write start pointer.

In some embodiments, the processing module 1602 is further configured to determine that the size of the to-be-written message is smaller than or equal to a size of the message storage area.

In some embodiments, the pointer information includes an initial position of a first write start pointer and an initial position of a first write end pointer.

The processing module 1602 is specifically configured to read the message body starting from an initial position of a second write end pointer until reaching the initial position of the first write end pointer. The initial position of the second write end pointer is an initial position of the first write end pointer from a previous reading operation.

In some embodiments, the processing module 1602 is further configured to: obtain the initial position of the first write end pointer from the queue header and determine that the initial position of the first write end pointer does not exceed a boundary of a read message; and/or obtain the initial position of the first write end pointer from the queue header and discard the read message in response to determining that the initial position of the first write end pointer exceeds the boundary of the read message.

In some embodiments, the processing module 1602 is further configured to determine that a message update is present in response to determining that an initial position of a second write start pointer is inconsistent with the initial position of the first write start pointer.

In some embodiments, a data structure of the message body includes a message header and a payload part. The message header includes length information of a payload. The processing module 1602 is further configured to determine that a difference between the initial position of the first write start pointer and the initial position of the second write start pointer is greater than or equal to a length of the message header of the message body.

In some embodiments, the processing module 1602 is further configured to determine that the difference between the initial position of the first write start pointer and the initial position of the second write start pointer is smaller than or equal to a size of the message storage area.

In some embodiments, the processing module 1602 is specifically configured to: parse a message header of the message body from the initial position of the second write end pointer and obtain length information of a payload in the message header, where the payload includes human-machine-environment data; and read the payload based on the length information of the payload until reaching the initial position of the first write end pointer.

In some embodiments, a data structure of the message body further includes a topic identifier part. A message header further includes length information of a topic identifier. The processing module 1602 is further configured to: parse the message header of the message body and obtain the length information of the topic identifier in the message header; obtain a topic corresponding to the message body based on the length information of the topic identifier; and determine that the topic matches a subscription list.

In some embodiments, the processing module 1602 is specifically configured to perform matching sequentially in an order of full matching, parameter matching, and wildcard matching based on a matching weight, until a match succeeds.

In some embodiments, the processing module 1602 is specifically configured to determine that a recorded subscriber is present in the subscription list.

In some embodiments, the processing module 1602 is further configured to determine that the message header is correct.

In some embodiments, the processing module 1602 is further configured to determine that a cancellation token is valid.

In some embodiments, the processing module 1602 is further configured to apply for a shared memory space, and establish a message queue in the shared memory space. The message queue includes: a queue header and a storage area.

In some embodiments, the human-machine-environment data includes human-related data, machine-related data, human-machine interaction-related data, or environment-related data. The human-related data includes one or a combination of: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data. The machine-related data includes one or a combination of: machine operation data, fault alarm data, machine manipulation data, machine model data, machine communication data, or machine positioning data. The human-machine interaction-related data includes one or a combination of: human-machine voice-interaction data, human-machine text-interaction data, human-machine touch-interaction data, human-machine gesture or action-interaction data, human-machine electroencephalogram-interaction data, human-machine eye-tracking-interaction data, or human-machine expression-interaction data. The environment-related data includes one or a combination of: location data, humidity data, temperature data, chromaticity data, brightness data, weather data, road condition data, traffic data, stimulus signal data, event or signal marking data.

The apparatus in this embodiment may be used for performing the technical solutions of the above method embodiments, and has an implementation principle similar to technical effects, details of which are omitted herein.

The embodiments of the present disclosure further provide an edge computing device. The edge computing device includes a processor and a memory. The memory stores a program or instructions executable on the processor. The program or the instructions, when executed by the processor, implements steps of the human-machine-environment data communication method as described in the embodiments shown in FIG. 1 to FIG. 15.

The embodiments of the present disclosure further provide a human-machine-environment data communication system. The human-machine-environment data communication system includes the edge computing device as described above. The edge computing device configures a message queue and/or a topic for a publisher and a subscriber to communicate based on the message queue and/or the topic.

The embodiments of the present disclosure further provide a computer-readable storage medium. The computer-readable storage medium stores a program or instructions. The program or the instructions, when executed by a processor, implements steps of the human-machine-environment data communication method as described in the embodiments shown in FIG. 1 to FIG. 15.

The embodiments of the present disclosure further provide a computer program product. The computer program product, when executed by a processor, implements steps of the human-machine-environment data communication method as described in the embodiments shown in FIG. 1 to FIG. 15.

Reference is specifically made to FIG. 17 below. FIG. 17 shows a schematic structural diagram of an edge computing device 700 adapted to implement the embodiments of the present disclosure. The edge computing device 700 according to the embodiment of the present disclosure may include, but not limited to, a mobile terminal such as a mobile phone, a laptop computer, a digital broadcast receiver, a Personal Digital Assistant (PDA), a tablet computer or PAD, a Portable Multimedia Player (PMP), or a vehicle-mounted terminal (e.g., a vehicle-mounted navigation terminal), or a fixed terminal such as a digital TV, a desktop computer, etc. The illustrated edge computing device is exemplary only, and should not be construed as limiting the function and scope of use of the embodiments of the present disclosure.

As shown in FIG. X, the edge computing device 700 may include a processing apparatus 701 (e.g., a central processing unit, a graphics processor, etc.), which may perform various appropriate actions and processes in accordance with a program stored in an ROM (Read Only Memory) 702 or loaded from a storage apparatus 708 into an RAM (Random Access Memory) 703. Various programs and data required for operation of the edge computing device 600 may also be stored on the RAM 703. The processing apparatus 701, the ROM 702, and the RAM 703 are connected to each other through a bus 704. An input/output (I/O) interface 705 is also connected to bus 704.

Generally, the following apparatuses may be connected to the I/O interface 705: an input apparatus 706 including, for example, a touch screen, a touch pad, a keyboard, a mouse, a camera, a microphone, an accelerometer, a gyroscope, etc.; an output apparatus 707 including, for example, a Liquid Crystal Display (LCD), a speaker, a vibrator, and the like; a storage apparatus 708 including, for example, magnetic tape, hard disk, etc.; and a human-machine-environment data communication apparatus 709. The human-machine-environment data communication apparatus 709 may allow the edge computing device 700 to perform wireless or wired communication with other devices for data exchange. Although the edge computing devices 700 having various apparatuses are illustrated, it can be appreciated that it is not necessary to implement or provide all the illustrated apparatuses. More or fewer apparatuses may be implemented or provided.

In particular, according to an embodiment of the present disclosure, the processes described above with reference to the flowcharts may be implemented as computer software programs. For example, an embodiment of the present disclosure includes a computer program product, which includes a computer program carried on a non-transient computer-readable medium. The computer program includes program codes for implementing the method illustrated in any of the flowcharts. In these embodiments, the computer program may be downloaded and installed from a network through the human-machine-environment data communication apparatus 709, or installed from the storage apparatus 708, or installed from the ROM 702. When the computer program is executed by the processing apparatus 701, the above-mentioned functions defined in the MES management method according to the embodiments of the present disclosure are performed.

It is to be noted that the above computer-readable medium in the present disclosure may be a computer-readable signal medium or a computer-readable storage medium or any combination thereof. The computer-readable storage medium may be, but not limited to, for example, an electrical, magnetic, optical, electromagnetic, infrared, or semiconductor system, apparatus, or device, or any combination thereof. More specific examples of the computer-readable storage medium may include, but not limited to: an electrical connection having one or more wires, a portable computer disk, a hard disk, a Random Access Memory (RAM), a Read Only Memory (ROM), an Erasable Programmable Read Only Memory (EPROM) or a flash memory, an optical fiber, a Compact Disc Read-Only Memory (CD-ROM), an optical memory device, a magnetic memory device, or any suitable combination thereof. In the present disclosure, the computer-readable storage medium may be any tangible medium including or storing programs, which may be used by or used with an instruction execution system, apparatus, or device. In the present disclosure, the computer-readable signal medium may include a data signal propagated in a baseband or as a part of a carrier that carries computer-readable program codes. Such propagated data signal may be in various forms, including but not limited to an electromagnetic signal, an optical signal, or any suitable combination thereof. The computer-readable signal medium may be any computer-readable medium other than the computer-readable storage medium. The computer-readable signal medium may transmit, propagate, or transfer programs used by or used with an instruction execution system, apparatus or device. The program codes contained on the computer-readable medium may be transmitted via any appropriate medium, including but not limited to electric cable, optical cable, Radio Frequency (RF), or any suitable combination thereof.

In some embodiments, the client and the server may communicate using any currently known or future-developed network protocol, such as HTTP (HyperText Transfer Protocol), and may be in communication interconnection with digital data in any form or medium (e.g., a communication network). Examples of communication networks include a Local Area Network ("LAN"), a Wide Area Network ("WAN"), the Internet work (e.g., the Internet), and an end-to-end network (e.g., ad hoc end-to-end network), as well as any currently known or future-developed network.

The above-mentioned computer-readable medium may be contained in the above-mentioned edge computing device, or it may be separated and not assembled into the edge computing device.

The above-mentioned computer-readable medium carries one or more programs which, when executed by the edge computing device, cause the edge computing device to: parse a queue header of a message queue and obtain pointer information, in which the message queue is established in a shared memory space and includes a queue header and a message storage area, in which the queue header includes the pointer information, and in which the message storage area is used to store a message body and the message body includes human-machine-environment data; and read the message body from the message storage area or write the message body to the message storage area based on the pointer information.

The computer program codes for implementing the operations according to the embodiments of the present disclosure may be written in one or more programming languages or any combination thereof. The programming languages may include object-oriented programming languages, such as Java, Smalltalk, or C++, as well as conventional procedure-oriented programming languages, such as "C" language or similar programming languages. The program codes may be executed completely on a user computer, partly on the user computer, as a standalone software package, partly on the user computer and partly on a remote computer, or completely on the remote computer or server. In a case where the remote computer is involved, the remote computer may be connected to the user computer through any types of network, including a Local Area Network (LAN) or a Wide Area Network (WAN), or to an external computer (e.g., over the Internet by using an Internet service provider).

The flowcharts and block diagrams in the accompanying drawings illustrate architectures, functions, and operations of possible implementations of systems, methods, and computer program products according to various embodiments of the present disclosure. In this regard, each block in the flowcharts or block diagrams may represent a module, a program segment, or a part of codes. The module, program segment, or part of codes may contain one or more executable instructions for implementing a specified logical function. It should also be noted that, in some alternative implementations, the functions showed in blocks may occur in an order other than the order illustrated in the drawings. For example, two blocks illustrated in succession may actually be executed substantially in parallel with each other, or sometimes even in a reverse order, depending on functions involved. It should also be noted that each block in the block diagrams and/or flowcharts, or any combination of the blocks in the block diagrams and/or flowcharts, may be implemented using a dedicated hardware-based system configured to perform specified functions or operations or may be implemented using a combination of dedicated hardware and computer instructions.

The units described in the embodiments of the present disclosure may be embodied as software or hardware. Here, names of the units do not constitute a limitation on the units the under certain circumstances.

The functions described herein above may be performed, at least in part, by one or more hardware logic components. For example, without limitation, exemplary types of suitable hardware logic components include a Field Programmable Gate Array (FPGA), an Application Specific Integrated Circuit (ASIC), an Application Specific Standard Product (ASSP), a System on Chip (SOC), a Complex Programmable Logic Device (CPLD), and the like.

In the context of the present disclosure, a machine-readable medium may be a tangible medium, which may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of a machine-readable storage medium would include an electrical connection having one or more wires, a portable computer disk, a hard disk, a Random Access Memory (RAM), a Read Only Memory (ROM), an Erasable Programmable Read Only Memory (EPROM) or flash memory, an optical fiber, a Compact Disc Read Only Memory (CD-ROM), an optical memory device, a magnetic memory device, or any suitable combination thereof.

According to one or more embodiments of the present disclosure, the present disclosure provides a computer-readable storage medium. The computer-readable medium stores a computer program. The computer program is configured to perform the MES management method as described provided according to the embodiments of the present disclosure.

The above description is only intended to explain the preferred embodiments of the present disclosure and the employed technology principles. It will be appreciated by those skilled in the art that the scope of the present disclosure herein is not limited to the technical solutions formed by the specific combination of the above technical features, but should also encompass any other combinations of features described above or equivalents thereof without departing from the above concept of the present disclosure. For example, the above features and the technical features disclosed in the present disclosure having similar functions (but not limited to them) are replaced with each other to form the technical solution.

Further, although the operations are depicted in a specific order, this should not be construed as requiring these operations to be performed in the specific order illustrated or in a sequential order. Under certain circumstances, multitasking and parallel processing may be advantageous. Likewise, although several specific implementation details are included in the above discussion, these should not be construed as limitations on the scope of the present disclosure. Certain features that are described in the context of separate embodiments can also be implemented in combination in a single embodiment. Conversely, various features described in the context of a single embodiment can also be implemented in multiple embodiments separately or in any suitable combination.

Although the subject matter has been described in language specific to structural features and/or logical actions of the method, it should be understood that the subject matter defined in the appended claims is not necessarily limited to the specific features or actions described above. On the contrary, the specific features and actions described above are merely exemplary forms of implementing the claims.

## Claims

1. A human-machine-environment data communication method, comprising:
parsing a queue header of a message queue and obtaining pointer information, wherein the message queue is established in a shared memory space and comprises the queue header and a message storage area, wherein the queue header comprises the pointer information, and wherein the message storage area is used to store a message body and the message body comprises human-machine-environment data; and
reading the message body from the message storage area or writing the message body to the message storage area based on the pointer information.

2. The method according to claim 1, wherein:
the pointer information comprises an initial position of a first write start pointer and an initial position of a first write end pointer; and
said reading the message body from the message storage area or writing the message body to the message storage area based on the pointer information comprises:
modifying the initial position of the first write end pointer to an end position according to a size of a to-be-written message, wherein a difference between the end position and the initial position is equal to the size of the to-be-written message; and
writing the to-be-written message starting from the initial position of the first write start pointer until the to-be-written message is completely written, and updating the initial position of the first write start pointer to an end position of the to-be-written message.

3. The method according to claim 2, wherein the method further comprises, prior to said modifying the initial position of the first write end pointer to the end position according to the size of the to-be-written message: obtaining a mutual exclusion lock; and
wherein the method further comprises, subsequent to said writing the to-be-written message starting from the initial position of the first write start pointer until the to-be-written message is completely written, and updating the initial position of the first write start pointer to the end position of the to-be-written message: releasing the mutual exclusion lock.

4. The method according to claim 3, further comprising, prior to said modifying the initial position of the first write end pointer to the end position according to the size of the to-be-written message:
determining that the initial position of the first write start pointer is the same as the initial position of the first write end pointer.

5. The method according to claim 3, further comprising, prior to said modifying the initial position of the first write end pointer to the end position according to the size of the to-be-written message:
in response to the initial position of the first write start pointer being different from the initial position of the first write end pointer, setting the initial position of the first write start pointer and the initial position of the first write end pointer to be the same.

6. The method according to claim 5, wherein said setting the initial position of the first write start pointer and the initial position of the first write end pointer to be the same comprises:
updating the initial position of the first write start pointer to the initial position of the first write end pointer, or
updating the initial position of the first write end pointer to the initial position of the first write start pointer.

7. The method according to any one of claims 2 to 6, further comprising, prior to said modifying the initial position of the first write end pointer to the end position according to the size of the to-be-written message:
determining that the size of the to-be-written message is smaller than or equal to a size of the message storage area.

8. The method according to claim 2, wherein:
the pointer information comprises an initial position of a first write start pointer and an initial position of a first write end pointer; and
said reading the message body from the message storage area or writing the message body to the message storage area based on the pointer information comprises:
reading the message body starting from an initial position of a second write end pointer until reaching the initial position of the first write end pointer, wherein the initial position of the second write end pointer is an initial position of the first write end pointer from a previous reading operation.

9. The method according to claim 8, further comprising, subsequent to said reading until reaching the initial position of the first write end pointer:
obtaining the initial position of the first write end pointer from the queue header and determining that the initial position of the first write end pointer does not exceed a boundary of a read message; and/or
obtaining the initial position of the first write end pointer from the queue header and discarding the read message in response to determining that the initial position of the first write end pointer exceeds the boundary of the read message.

10. The method according to claim 8, further comprising, prior to said reading the message body starting from the initial position of the second write end pointer until reaching the initial position of the first write end pointer:
determining that a message update is present in response to determining that an initial position of a second write start pointer is inconsistent with the initial position of the first write start pointer.

11. The method according to claim 10, wherein:
a data structure of the message body comprises a message header and a payload part, wherein the message header comprises length information of a payload; and
the method further comprises, prior to said reading the message body starting from the initial position of the second write end pointer until reaching the initial position of the first write end pointer:
determining that a difference between the initial position of the first write start pointer and the initial position of the second write start pointer is greater than or equal to a length of the message header of the message body, and/or
wherein the method further comprises:
determining that the difference between the initial position of the first write start pointer and the initial position of the second write start pointer is smaller than or equal to a size of the message storage area.

12. The method according to any one of claims 8 to 11, wherein said reading the message body starting from the initial position of the second write end pointer until reaching the initial position of the first write end pointer comprises:
parsing a message header of the message body from the initial position of the second write end pointer and obtaining length information of a payload in the message header, wherein the payload comprises human-machine-environment data; and
reading the payload based on the length information of the payload until reaching the initial position of the first write end pointer.

13. The method according to claim 1, wherein:
a data structure of the message body further comprises a topic identifier part;
a message header further comprises length information of a topic identifier; and
the method further comprises, prior to said reading the message body from the message storage area or writing the message body to the message storage area based on the pointer information:
parsing the message header of the message body and obtaining the length information of the topic identifier in the message header;
obtaining a topic corresponding to the message body based on the length information of the topic identifier; and
determining that the topic matches a subscription list, and/or
wherein said determining that the topic matches the subscription list comprises:
performing matching sequentially in an order of full matching, parameter matching, and wildcard matching based on a matching weight, until a match succeeds, and/or
wherein the method further comprises, prior to said parsing the message header of the message body and obtaining the length information of the topic identifier in the message header:
determining that a recorded subscriber is present in the subscription list.

14. An edge computing device, comprising:
a processor; and
a memory storing a program or instructions executable on the processor, wherein the program or the instructions, when executed by the processor, implements steps of the human-machine-environment data communication method according to any one of claims 1 to 13.

15. A human-machine-environment data communication system, comprising the edge computing device according to claim 14, wherein the edge computing device configures a message queue and/or a topic for a publisher and a subscriber to communicate based on the message queue and/or the topic.
